(19)

Europäisches
Patentamt
European
Patent Office
Office européen
des brevets

(11) **EP 1 928 732 B1**

(12) **EUROPEAN PATENT SPECIFICATION**

(45) Date of publication and mention
of the grant of the patent:
**11.07.2012 Bulletin 2012/28**

(21) Application number: **06814013.6**

(22) Date of filing: **31.08.2006**

(51) Int Cl.:
*B64C 1/14* *(2006.01)*      *B60J 1/00* *(2006.01)*

(86) International application number:
**PCT/US2006/034073**

(87) International publication number:
**WO 2007/037911 (05.04.2007 Gazette 2007/14)**

(54) **LAMINATED PASSENGER WINDOW FOR REDUCED NOISE TRANSMISSION**

LAMINIERTES PASSAGIERFENSTER FÜR REDUZIERTE LÄRMÜBERTRAGUNG

FENETRE DE PASSAGER STRATIFIEE PERMETTANT DE LIMITER LE TRANSFERT SONORE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.09.2005 US 237106**

(43) Date of publication of application:
**11.06.2008 Bulletin 2008/24**

(73) Proprietor: **THE BOEING COMPANY
Chicago, IL 60606-2016 (US)**

(72) Inventors:
• **RASSAIAN, Mostafa
Bellevue, WA 98008-3145 (US)**

• **LEE, Jung-chuan
Federal Way, WA 98023 (US)**
• **MONTGOMERY, Joshua M.
Seattle, WA 98117 (US)**
• **PARE, Shawn, M.
Woodwinville, WA 98072 (US)**
• **CHRISTENSON, Terry, N.
Snohomish, WA 98296 (US)**

(74) Representative: **Steil, Christian et al
Witte, Weller & Partner
Postfach 10 54 62
70047 Stuttgart (DE)**

(56) References cited:
**EP-A2- 0 869 057      US-A- 2 381 194
US-A- 4 121 014      US-A- 4 793 108**

EP 1 928 732 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an airborne mobile platform laminate window that reduces vibration and sound transmissions to the airborne mobile platform fuselage interior.

The reduction of sound transmissions to the fuselage interior of an airborne mobile platform (e.g. a modern jet aircraft) is becoming more of a concern for commercial aircraft manufacturers and their customers in an increasingly-competitive international marketplace. Commercial aircraft manufacturers and their customers are interested in reducing the level of noise inside their aircraft. More specifically, they are interested in reducing the amount of noise that is transferred from the aircraft exterior to the aircraft interior. Noise is typically created by the turbulent flow along the fuselage and radiated from the engine exhaust plume. An area of the aircraft through which noise is typically transferred is the fuselage sidewall, including the aircraft windows and its surrounding window belt area. Although interior noise is considered undesirable in commercial aircraft, aircraft manufacturers and their customers are simultaneously demanding aircraft that are lighter in order to reduce costs, and aircraft that have larger windows in order to increase outside visibility and permit larger amounts of light to enter the aircraft cabin.

While current aircraft windows are generally satisfactory for their applications, each is associated with its share of limitations. Historically, aircraft manufacturers used relatively dense materials to reduce the amount of noise that entered the cabin through the windows and window beltline. This meant using thick, transparent window materials or multiple pieces of a transparent material to reduce noise transmission. The problem with the prior art solutions to interior noise is that noise levels inside the cabin remained at undesirable levels, the aircraft weight was not being reduced, and the window size, and thus the amount of natural interior light, remained relatively small.

A need remains in the art for an airborne mobile platform window that overcomes the limitations associated with the prior art, including, but not limited to those limitations discussed above. This in turn, will result in an aircraft window that reduces interior noise relative to existing aircraft windows, remains relatively lightweight, and that is larger in size compared to traditional aircraft windows to permit higher quantities of light to enter the aircraft cabin. From US 4,793,108 an enclosed interlayer plastic laminated window for aircraft passenger cabin is known having a peripheral edge insert for providing additional shear-bearing area with respect to the chamber peripheral edge portion of the outer ply of the window. From EP 0 869 057 A2 a sound absorbing aircraft transparency is known including an outboard pane assembly, a vibration dampening/sound absorbing pane assembly and a spacer frame assembly for retaining the outboard pane assembly and the vibration dampening/sound absorbing pane assembly in spaced-apart generally parallel facing relationship to provide a space therebetween. The vibration dampening/sound absorbing pane assembly is a multilayer laminate which includes a substrate, an adhesive interlayer provided over a surface of the substrate and a sound dampening material provided over the adhesive interlayer and adhered by the adhesive interlayer to the substrate. In an alternative embodiment, the aircraft transparency of the present invention includes in addition to the foregoing, a transparent electroconductive coating interposed between the adhesive interlayer and the substrate and facilities in contact with the electroconductive coating to pass a current through the electroconductive coating to heat the coating sufficiently to remove or to prevent the accumulation of fog, ice, frost and the like on the aircraft transparency.

It is an object of the present invention to provide an improved window that reduces the noise level inside of a cabin of an aircraft.

The above object is achieved by a window according to claim 1.

A window for an airborne mobile platform is disclosed. More specifically, combinations of various window layers for use in an airborne mobile platform are disclosed. A window for an airborne mobile platform has an interior layer of transparent material and an exterior layer of transparent materials that together with the interior layer, define a space. The space may be a layer of air or a vacuum layer. The exterior layer may further be a multi-layer of transparent materials, such as an acrylic layer, a viscous noise-absorbing layer of transparent material, and a glass layer. A rubber seal, that is, a visco-elastic rubber, around the perimeter of the layers of the window provides a vibration and noise-absorbing frame that is further surrounded by a c-channel that peripherally bounds the rubber seal on three of its sides. The c-channel provides additional structural integrity to the window and acts as a structural member to provide support to the fuselage.

The invention is defined in claim 1. Preferred embodiment are defined in the subclaims.

According to another aspect, the invention relates to the use of the above window in an airborne mobile platform fuselage.

The features, functions, and advantages can be achieved independently in various embodiments of the present inventions or may be combined in yet other embodiments.

The present invention will become more fully understood from the detailed description and the accompanying drawings, wherein:

Figure 1 is a side view of an airborne mobile platform depicting a passenger window beltline;

Figure 2A is a perspective view of an aircraft window having a c-ring frame;

Figure 2B is a cross-sectional view of the c-ring frame of the aircraft window of Figure 2A;

Figure 3A is cross-sectional view of an aircraft window configuration of the prior art;

Figure 3B is a cross-sectional view of an aircraft window configuration not according to the invention;

Figure 3C is a cross-sectional view of an aircraft window configuration not according to the invention;

Figure 3D is a cross-sectional view of an aircraft window configuration according to a first embodiment of the present invention;

Figure 3E is a cross-sectional view of an aircraft window configuration according to a second embodiment of the present invention;

Figure 4 is a graph of the average velocity power spectral density (PSD) over a broadband frequency for the window configurations according to the teachings of the present invention;

Figure 5 is a graph of the reduction of vibration (db) over a broadband frequency range for the window configuration employing a layer of visco-elastic material, relative to the prior art configuration;

Figure 6 is a graph of the average velocity power spectral density (PSD) over a frequency broadband for various window configurations, and

Figure 7 is a graph of the average velocity power spectral density (PSD) over a frequency broadband for various window configurations employing a stiffer c-ring.

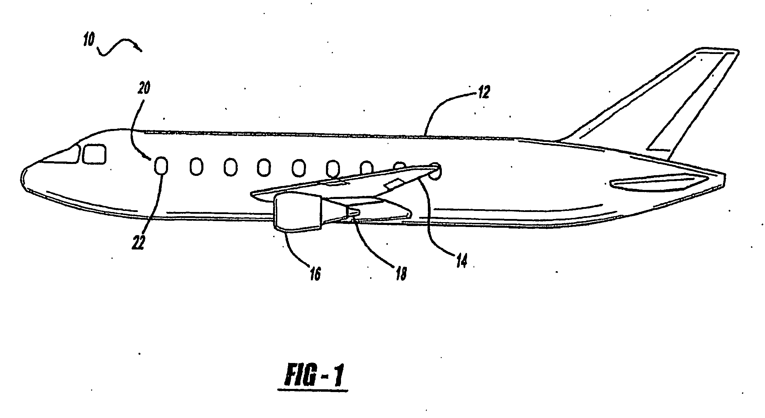

The following description of the preferred embodiments is merely exemplary in nature and is in no way intended to limit the invention, its application, or uses. Turning now to Figure 1, an airborne mobile platform 10 (e.g. an aircraft) is depicted. The aircraft has a fuselage 12, a wing 14 attached to the fuselage 12, an engine 16 attached to the wing 14, an engine exhaust area 18, and a window beltline 20, located just above the wing 14, having a multitude of passenger windows 22. In an aircraft 10 having the window configuration depicted, noise from a variety of sources is able to penetrate through the passenger windows 22 and their surrounding window frames 23.

One such source is the exhaust plume that originates in the engine exhaust area 18, wherefrom noise radiates outwardly from the plume for a number of engine diameters aft of the engine 16. Engine noise is a key concern in the aft cabin of the aircraft during take-off, climb, and at cruising altitudes. In addition, noise is generated at the fluid boundary layer of the aircraft as it moves through the air during flight. This noise source is apparent throughout the aircraft at cruising altitudes. The boundary layer is that layer of fluid in the immediate vicinity of a bounding surface. For an aircraft wing, the boundary layer is the part of the flow immediately adjacent to the wing, and for the fuselage, the part of the flow immediately adjacent to the fuselage. The boundary layer effect occurs at the region in which all changes occur in the flow pattern, for example, where the boundary layer causes distortion in the surrounding nonviscous flow.

To compound noise generation, the boundary layer also adds to the effective thickness of the aircraft, through the displacement thickness, which increases the pressure drag of the aircraft. Also, the shear forces at the surface of the aircraft wing create skin friction drag. Larger wings generally create a larger amount of drag. Since the engines are used to overcome the accumulated drag in order to move the aircraft through the air, as the drag increases, the engines must work harder to overcome the drag, which increases noise. Also, as the size of the aircraft increases, the engine size usually increases, which increases the noise generated. This highlights the strong dependence of acoustic design of an aircraft on aerodynamics and propulsion. Ultimately, the presence of noise within aircraft interiors is undesirable, and the present invention may be used to reduce an undesirable level of noise, such as a level that is created by a large aircraft, to a level that is desirable or at least acceptable.

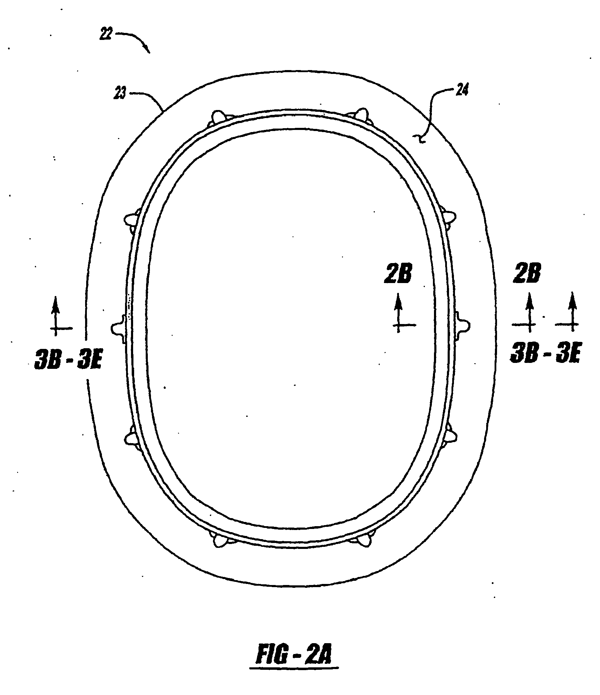

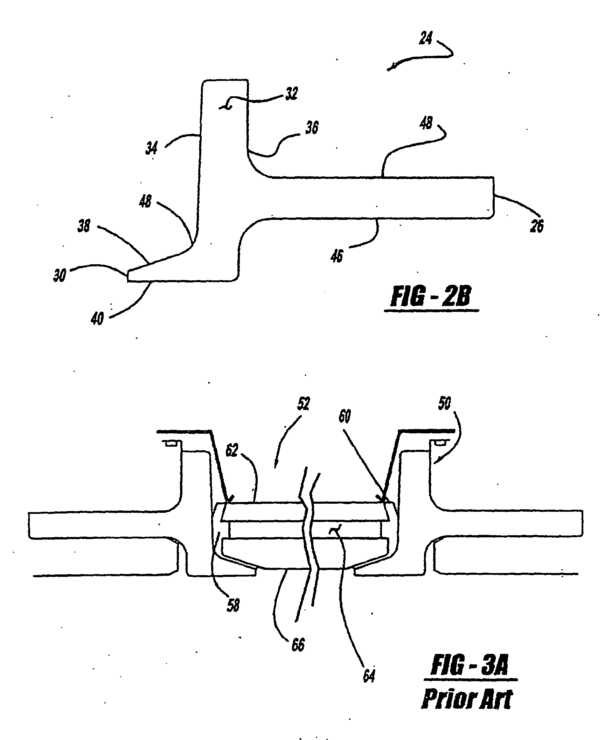

To reduce the level of noise detectable in a fuselage interior for a given aircraft, various window material panel configurations, according to the present invention, have been developed. Window panel material configurations are also known as window or laminate buildups, window or laminate layups, or simply as layups. Turning now to Figures 2A and 2B, window parts that make up a portion of an aircraft window 22 will be explained. Figure 2A depicts a window frame 23 of a window 22 of the window beltline 20, and Figure 2B depicts a structure c-ring 24, or c-channel, of the window perimeter that forms the window frame 23. The window frame 23 is defined by a c-ring 24 that is generally formed by an outside flange 30 and a web 32. The c-ring 24 has a mounting flange 26, which traverses the perimeter of the window 22, and has a mounting flange inside surface 48 and a mounting flange outside surface 46 that are used for window alignment and mounting purposes. Continuing with the c-ring 24, the outside flange 30 is referred to as the outside flange because it generally faces the fuselage exterior when the window 22 is installed. The outside flange 30 has an outside flange inside surface 38 and an outside flange outside surface 40.

The web 32 not only blends, or joins, the mounting flange 26 and the outside flange 30, but it provides rigidity, support and strength for the resulting c-ring 24. The web 32 and outside flange 30 provide a partial enclosure for a visco-elastic rubber seal, to be discussed later, that abuts against the web inside surface 34 and the outside flange inside surface 38. The web 32 has a web inside surface 34 and a web outside surface 36. The rigidity or stiffness of the c-ring 24 is cumulatively provided by the outside flange 30, web 32, and mounting flange 26. The c-ring 24 may be manufactured from a rigid, lightweight material such as aluminum or titanium, or other metal or non-metal material. With respect to weights, the specific material will be less dense than most metals or non-metals in its respective category. As will be discussed later, making the c-ring 24 stiffer may provide benefits in terms of noise reduction. To make the c-ring 24 relatively stiffer, a different aircraft aluminum or non-aluminum material could be used. Alternatively, a thicker cross-section of a given material could be used for stiffening purposes.

Before turning to the structure and operative workings of the window layer configurations of the present invention, a review of the construction of a prior art aircraft window will be briefly examined. Figure 3A depicts an aircraft window 50 of the prior art having transparent layers as laminate pieces that make-up the transparent area 52. The window 50 is bounded about its perimeter by the c-channel frame 24. Against the c-channel 24 is a first rubber seal 58, and a second rubber seal 60. The rubber seals 58, 60 are similarly situated in that the seals 58, 60 together make up a single continuous seal that traverses the interior portion of the window 50 and bounds the window's laminate pieces, which will now be described.

The transparent area 52 of the prior art window 50 is comprised of a mid acrylic layer 62, a center airspace 64, and an outer acrylic layer 66. The layers of material are held in place by a retainer clip. The outer acrylic layer 66 is generally the layer that may be exposed to the elements on the aircraft exterior, while the mid acrylic layer 62 is the layer that lies adjacent to a transparent dust pane (not shown). A passenger may touch the transparent dust pane when a non-transparent, retractable dust cover (not shown) is in its retracted position adjacent a passenger. The acrylic layers 62, 66 are bounded about their peripheries by the rubber seals 58, 60, which define the air space 64 in conjunction with the acrylic layers 62, 66. The rubber seals 58, 60, to some degree, seal out noise that may propagate into the window layup and act as a dampener to dampen noise that is able to initially propagate to and into the seal.

In the prior art of Figure 3A, the outer acrylic layer of 8.89 mm (0.35"), the air layer of 6.86 mm (0.27"), and the mid acrylic layer of 5.59 mm (0.22") were the respective measurements taken on a test window, the results of such testing to be discussed later. A limitation of the prior art window of Figure 3A is the level of noise transmitted through its panes. The embodiments of the present invention will be compared to the prior art Figure 3A, also known as the baseline window or layup.

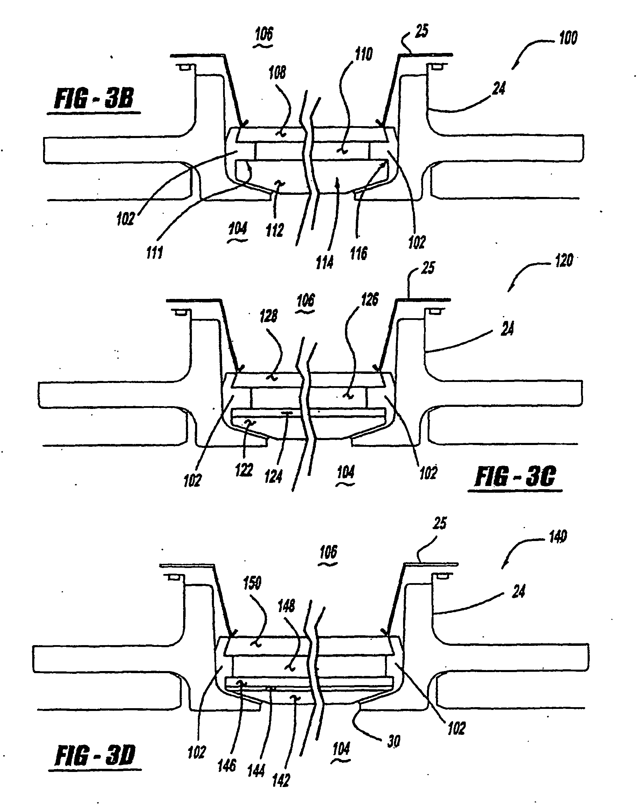

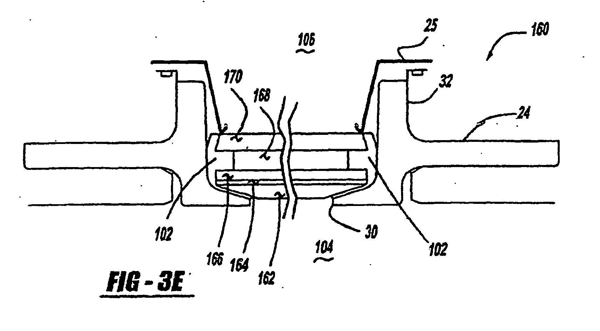

Turning now to the operative workings of the present invention, Figures 3B-3E depict various window layer configurations where figure 3B and 3C are examplary only, whilst figures 3D and 3E show a first and second embodiment of the invention, respectively. Before detailed discussion of Figures 3B-3E, it should be noted that the cross-sectional views depict a c-ring 24 and a rubber seal 102 on each side of the window. Although depicted as such, each c-ring 24 and rubber seal 102 is actually a single continuous piece of material that traverses the entire periphery of the laminate-formed window 22. Additionally, while the rubber seal 102 is shown abutting the c-ring 24 in places, a gap of about 0.76 mm (0.03") to more than 2.54 mm (0.1 ") between the rubber seal and c-ring 24 may exist in some applications. An oval-shaped window and a rectangular-shaped window with rounded corners are examples of windows according to embodiments of the present invention; however, the invention is not limited to such shapes and other window shapes may be utilized.

Figure 3B depicts a cross-sectional view of an example of an aircraft window 100. The aircraft window 100 has multiple transparent layers sandwiched between a c-ring 24 that forms a frame that is lined with a rubber seal 102. The layers of material are held in place by a retainer clip 25, and not necessarily any force provided by the c-ring 24. Throughout the embodiments of the invention, acrylic is used as an example of a transparent material used as panes in the window; however, the acrylic could be any suitable transparent plastic, for example, polycarbonate. The arrangement of transparent layers from the aircraft fuselage exterior 104 to the aircraft fuselage interior 106 is: a first, outer acrylic layer 112, an air space or layer 110, and a second, inner acrylic layer 108. In the aircraft industry, the inner layer is sometimes referred to as a mid-layer. For the purposes of testing with regard to the present invention according to Figure 3B, the outer acrylic layer 112 is 12.95 mm (0.51"), the air layer 110 is 6.86 mm (0.27"), and the inner acrylic layer 108 is 5.59 mm (0.22"). The layers 108, 110, 112 are secured within the c-ring 24 and against the rubber seal 102. The layers 108, 110, 112 are designed such that noise waves traveling in the path indicated by arrow 114, may either be attenuated to some degree or completely stopped before reaching the inside area 106. More specific advantages in terms of the broadband frequency response, will be discussed later, in connection with embodiments of the invention.

The rubber seal 102 provides damping of vibration in both the outer pane 112 and middle pane 108. This reduces the noise transmitted through the transparent area 110. It also minimizes vibration, which originates as noise outside of the fuselage 12, from passing from the transparent layers of material into the c-ring 24 and subsequently into the fuselage interior 106. When a layer of window material protrudes into the rubber seal 102, the advantage is that the more rubber that is able to protrude around and contact the individual layers of material 108, 112, the more noise and vibration dampening the rubber is able to provide to the respective layer of material. That is, for vibrations that propagate to the edge of the material, the rubber seal 102 may dampen such vibrations since the rubber seal 102 contacts the edge of the material. Such a path through the c-ring 24, into the rubber seal 102, into the outer acrylic 112 and into the rubber seal 102 is noted by arrow 111. Because the rubber seal 102 is arranged in such a fashion, dampening of noise and vibration may occur.

Another path of noise propagation, from the aircraft exterior 104 to the rubber seal 102 is noted by arrow 116. The rubber seal 102 lies within the c-ring 24. The flange 30 and web 32 provide support to the rubber seal 102, which helps secure the window layers 108, 110, 112. The advantage of the window 100 over the baseline window of Figure 3A, is that increased sound dampening is achieved, at least because of its thicker outer layer 112 and its greater edge amount that abuts against the rubber seal 102. By dampening or eliminating noise, passenger comfort inside the aircraft is increased. In the case of noise path 116 the noise may propagate through the outer layer 112, but will then be partially or completely dampened by the rubber seal 102.

Turning now to Figure 3C, The window 120 has an increased number of layers, from three to four, over the previous example window 100. The layers and as-tested thicknesses of the example shown in Figure 3C, from the fuselage exterior 104 to the fuselage interior 106 are: an acrylic layer 122 that is 8.89 mm (0.35") thick, a glass layer 124 that is 0.64 mm (0.025") thick, an air layer 126 that is 6.86 mm (0.27") thick, and a second acrylic layer 128 that is 5.59 mm (0.22") thick. An advantage of the second window 120 over the first window 100 is a decrease in broadband frequency response over some frequencies and very similar responses over the balance of frequencies, which will be discussed later. In short, there is increased sound dampening with the second example.

Further comparing the window 100 and window 120, one can see that the window 100 has a 12.95 mm (0.51") thick outer acrylic pane, while the window 120 has an outer acrylic pane 122 that is 8.89 mm (0.35") thick and a glass pane 124 that is 0.64 mm (0.025") thick. The advantage is that the combination of these latter two panes, for a total thickness of 9.52 mm (.375"), provides the same amount of structural stiffness as the first example acrylic pane that is 12.95 mm (0.51") thick. The overall difference in window thickness is 3.43 mm (.135"), so the window 120 is thinner and provides comparable noise reduction as the first example, as will be discussed later. Furthermore, because the window 120 maintains the same level of structural stiffness and integrity as the window 100, the decreased thickness is an advantage.

Figure 3D depicts a window 140 of a first embodiment of the present invention. The first embodiment window 140 has five transparent layers situated adjacent to one another to form the see-through area of the window. From the fuselage exterior 104 to the fuselage interior 106, specific thickness of the transparent layers were tested for their sound dampening and structural advantages. The layers tested consisted of an acrylic layer 142 that is 5.59 mm (0.22") thick, a urethane layer 144 that is 1.27 mm (.05") thick, a glass layer 146 that is 3.05 mm (0.12") thick, an air layer 148 that is 6.86 mm (0.27") thick, and a second acrylic layer 150 that is 5.59 mm (0.22") thick. As in the prior examples these layers were placed between a rubber seal 102, which surrounded the layers and abutted against the inside perimeter of the c-ring 24. The rubber seat 102 fits within the outside flange 30 and the web 32. At specific frequencies, this window 140 provides sound dampening advantages over the prior examples, as will be discussed later. Urethane, such as the urethane used in this embodiment, is generally a material whose properties are dependent upon time, temperature, and frequency. Additionally, as an interlayer material, instead of urethane, a vinyl or silicon material could be used to bond its adjacent materials and provide sound dampening advantages. Furthermore, for the present embodiment, urethane typically possesses a loss factor around 0.06, but with a constant modulus of say, 68947 hPa (1000 psi), and a constant overall damping ratio. As previously stated, and applicable to the first embodiment, the rubber seal may actually form a slight gap with the c-ring 24, as opposed to the rubber seal firmly abutting the c-ring 25, since the retainer clip 25 secures the window layers.

Figure 3E depicts a cross-sectional view of a window 160 according to a second embodiment of the present invention. Like the first embodiment, the second embodiment window 160 also has five layers of transparent material that entail the layup structure. From the fuselage exterior 104 to the fuselage interior 106, the layers are: an acrylic layer 162 that is 5.59 mm (0.22") thick, a viscous layer 164 that is 1.27 mm (0.05") thick, a glass layer 166 that is 3.05 mm (0.12") thick, an air layer 168 that is 1.78 mm (0.27") thick, and a second, inner acrylic layer 170 that is 5.59 mm (0.22") thick. Like the other embodiment, the transparent layers are situated between a rubber seal 102, which surrounds and abuts against the layers. The rubber seal 102 is then mounted against the inside perimeter of the c-ring 24 within an area bounded by the web 32 and the outside flange 30. As the prior embodiment, the second embodiment window also provides advantages related to its sound dampening characteristics.

Concerning the visco-elastic material used in the present invention, it is a material that exhibits a high damping loss factor, generally greater than one ("1.0") - and generally possesses a low modulus when compared to metal. When used in the embodiments of the present invention, a visco-elastic material is one in which shear strains due to deflections (e.g. vibrations) are converted to heat, which serves as a loss or damping mechanism.

Before turning to the advantages of the above structures, an explanation of the evaluation parameters applied to the embodiments of the present invention will be provided. Power Spectral Density (PSD) was the means used to measure and evaluate the sound dampening characteristics of the various structures. PSD is the amount of power per unit (density) of frequency (spectral) as a function of the frequency and describes how the power (or variance) of a time series is distributed with frequency, that is PSD dictates which frequencies contain a signal's power. Mathematically, it is defined as the Fourier Transform of the autocorrelation sequence of the time series. An equivalent definition of PSD is the squared modulus of the Fourier transform of the time series, scaled by a proper constant term. Being power per unit of frequency, the dimensions are those of a power divided by Herz.

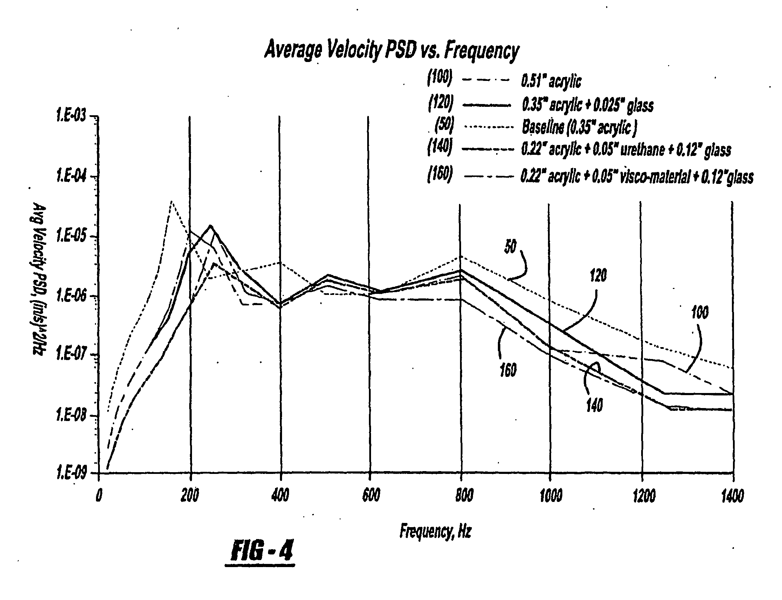

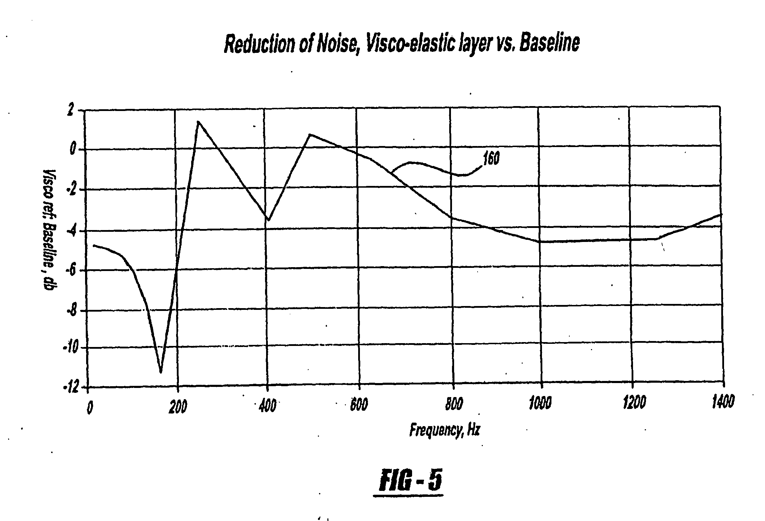

Now, Figures 4 through 7 will be used to explain the operative workings, performances and advantages of the various embodiments. Figure 4 is a graph of the average velocity power spectral density (PSD) over a broadband frequency for the window configurations according to the teachings of the present invention. The results of Figure 4 are based upon testing of an isolated window, that is, one window in isolation, using the finite element method (FEM). Figure 4 reveals that the baseline model of Figure 3A of the prior art has the highest velocity PSD for most of the frequency band, and the window with a visco-layer in it has the lowest velocity PSD response. The comparative results with respect to the baseline window reveals that the average velocity PSD reduction of the window with the visco-material layer is significant (about 11.3 dB at 160 Hz), see Fig. 5. This is due to the improvement of modal damping and the higher stiffness of the window layup, provided by the c-ring 24.

As can be seen from Figure 4, the second embodiment window 160 of Figure 3E having in part, a 5.59 mm (0.22") acrylic layer 162, a 1.27 mm (0.05") viscous material layer 164, and a 3.05 mm (0.12") glass layer 166, all adjacent the fuselage exterior, dampens the vibration levels across the broadest frequency range most effectively. Also depicted in Figure 4 is that the first embodiment window 140 also achieves a high level of dampening the vibration levels across a broad frequency range. The first embodiment window 140, depicted in Figure 3D, has in part, adjacent the fuselage exterior, a 5.59 mm (0.22") acrylic layer 142, a 1.27 mm (0.05") urethane material layer 144, and a 3.05 mm (0.12") glass layer 146. According to the graphical results of Figure 4, while the first embodiment window 140 and second embodiment window 160 of Figures 3D and 3E, respectively, display excellent vibration reduction across a broad range of frequencies, relative to the other embodiments, the window 100 of Figure 3B displays excellent vibration reduction for a narrow frequency range, approximately 300-390 herz. The window 100 employs a 12.95 mm (0.51") thick piece of acrylic adjacent the fuselage exterior 104. As Figure 4 depicts, for almost every frequency in the isolated window tests involving different compositions of the outer glass, the embodiments of the present invention performed better than that of the existing baseline window. For the purpose of the present invention, the term "outer glass" is known as those layers of material that lie between the 6.86 mm (0.27") airspace of the window and the fuselage exterior 104. Therefore, the "outer glass" may have more than one layer of material.

Figure 5 is a comparison graph that depicts the vibration reduction, in decibels (dB), achieved with the second embodiment window 160 having an outer pane of 5.59 mm (0.22") acrylic, 1.27 mm (0.05") visco-material, and 3.05 mm (0.12") glass. This particular window, known as the "visco-elastic window", is depicted in Figure 3E. The vibration reduction is calculated using the following formula:

$$\text{Reduction (dB)} = 20 \log (X_2/X_1)$$

where $X_1$ is the velocity PSD of the prior art window of Figure 3A and $X_2$ is the velocity PSD of the fourth embodiment window 160. Although the calculation was performed in terms of structural velocity, it is assumed that the normal velocity of the window is directly proportional to the radiated acoustic pressure. Therefore, the noise reduction associated with the second embodiment window is also represented by Figure 5.

The results depicted in Figure 5 are relative to the baseline window of Figure 3A. As an example, the second embodiment visco-elastic window dampens 6 decibels more at 200 Hz than the known window of Figure 3A. As depicted, for most of the broadband range from approximately 20 Hz to 1,400 Hz, the visco-elastic window 160 of the second embodiment responds much more favorably, in terms of dampening vibration, and reducing noise transmission, than the baseline window. In fact, the visco-elastic window analysis of Figure 5 depicts the most advantageous vibration reduction below 250 Hz and above 700 Hz.

In order to improve the benefit above 250 Hz, the present invention introduces a vacuum layer between the outer and middle panes. The effect of evacuating the air from between the two panes effectively decouples the panes over a broad frequency range. The vacuum layer, if utilized, in all embodiments may be either a full or partial evacuation of gas from between the middle and outer panes. Without the vacuum, when the outer pane deflects or vibrates during aircraft flight, it causes the air between the middle and the outer pane to act as a spring and is a medium to transmit vibration noise energy by compressing and expanding accordingly. This exerts a force on the middle pane and causes it to vibrate and transmit noise into the passenger cabin. When the panes are decoupled by a vacuum layer, the transmission of noise energy is effectively decoupled and lessened. There is, however, vibration energy transmitted through the boundary of the window layer panes in the area of the rubber seal.

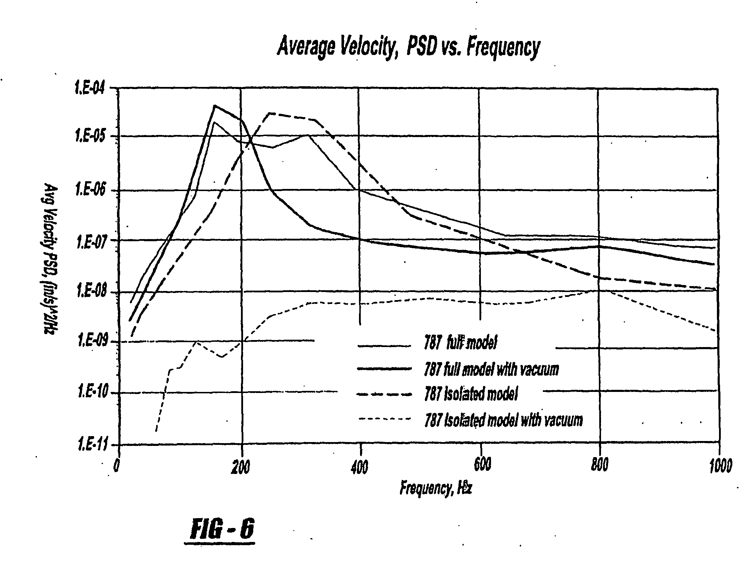

Turning to Figure 6, results of testing using the finite element method on an isolated window having a vacuum layer between the outer acrylic and mid-acrylic layers reveals that a window with a vacuum between physical panes has a great advantage over other windows with respect to sound dampening. The advantage is attributed to the result of sound not transmitting through a vacuum. Referring to the window layup of Figure 3E, the air layer was made into a vacuum layer. By examining the dashed curves of Figure 6, which are analysis performed on a 787 model aircraft window, a dramatic reduction in noise response is depicted. The dashed plots of Figure 6 are the results of analysis performed on an isolated window model, while the solid plots are the resulting responses of a full window belt model, that is, a non-isolated window. In actuality, the full window belt model consisted of a three-bay group of windows.

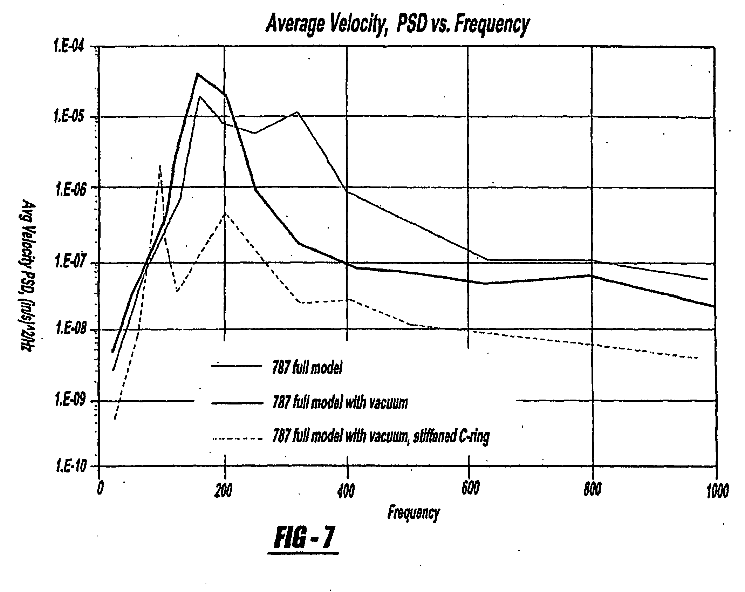

It was expected that the 787 window with a vacuum layer between the panes would provide an advantage over other windows. This is evident looking at the dashed plots of Figure 6, where the 787 isolated model with vacuum depicts a response that is more desirable than its non-vacuum counterpart. However, when the vacuum layer was incorporated into a full window belt model, the results depicted by the solid plots were obtained. The benefit due to the vacuum was reduced, particularly at low frequencies. In an attempt to reproduce the performance of the 787 isolated model with vacuum in the window belt model, a stiffer c-ring was investigated. The effects of a stiffer c-ring is depicted in Figure 7.

Further investigation and testing of an isolated window model reveals that the primary path of vibration from the outer pane to the middle pane is through the rubber seal. Further, the majority of the vibration is absorbed by the outer pane boundary, but vibration propagates more efficiently to the middle pane through the c-ring. Figure 7 depicts the results of a stiffer c-ring, such that the stiffer c-ring is effective in further decoupling the middle and outer panes, as desired. These results indicate that although a vacuum between window panes is effective for reducing vibration on the middle pane, stiffening the window frame c-ring provides additional vibration and sound reduction benefits.

Figure 7 depicts results for a 787 full model, a 787 full model with a vacuum layer between the outer and middle panes, and a 787 model with a vacuum layer and a stiffened c-ring. From Figure 7, the solid plots are examples of full beltline models, again three bay models, whereas the dashed plot indicates testing on what is essentially an isolated window. Although it is a full model, since the c-ring is stiffened in the finite element analysis, each window in the model is further isolated, which results in a more favorable, that is, increased dampening, response.

**Claims**

1. A window (140; 160) comprising:

   a first outside layer (142; 162) of transparent material;
   a second inside layer (150; 170) of transparent material parallel to the first outside layer (142; 162);
   a rubber seal (102) adjacent to the first layer (142; 162) and to the second layer (150; 170);
   a third layer (148; 168) of transparent material between the first and second layers, wherein the third layer (148; 168) is less dense than the first and second layer, wherein the third layer (148; 168) is a vacuum space;
   a fourth layer (146; 166) of transparent material disposed between the first transparent layer (142; 162) and the third transparent layer (148; 168); and
a fifth layer (144; 164) of transparent material disposed between the fourth transparent layer (146; 166) and the first layer (142; 162), and wherein the fifth layer (144; 164) of transparent material is a viscous material having a damping loss factor greater than 1.0.

2. The use of a window of claim 1 as a window in an airborne mobile platform fuselage.

3. Window of claim 1, further comprising a clip (25) that holds the first layer (142; 162) and the second layer (150; 170) in place.

4. Window of claim 1, wherein the first layer (142; 162) of transparent material protrudes into the rubber seal (102), and wherein peripheral edges of the second layer (150; 170) of transparent material protrude into the rubber seal (102) farther than the third layer (148; 168).

5. Window of claim 1, wherein the peripheral edges of the fourth layer protrude into the rubber seal (102).

6. Window of claim 1, wherein the peripheral edges of the fifth layer protrude into the rubber seal (102).

7. Window of claim 1, wherein the first layer (142; 162) is formed of an acrylic layer (162) and the fourth layer (146; 166) is formed of a glass layer (166).

**Patentansprüche**

1. Fenster (140; 160) mit:

   einer ersten äußeren Schicht (142; 162) transparenten Materials;
   einer zweiten inneren Schicht (150; 170) transparenten Materials parallel zu der ersten äußeren Schicht (142; 162);
   einer Gummidichtung (102), die an der ersten Schicht (142; 162) und an der zweiten Schicht (150; 170) anliegt;
   einer dritten Schicht (148; 168) transparenten Materials zwischen der ersten und zweiten Schicht, wobei die dritte Schicht (148; 168) eine geringere Dichte aufweist als die erste und die zweite Schicht, wobei die dritte Schicht (148; 168) ein Vakuumraum ist;
   einer vierten Schicht (146; 166) eines transparenten Materials, die zwischen der ersten transparenten Schicht (142; 162) und der dritten transparenten Schicht (148; 168) angeordnet ist; und

einer fünften Schicht (144; 164) transparenten Materials, die zwischen der vierten transparenten Schicht (146; 166) und der ersten Schicht (142; 162) angeordnet ist, und

wobei die fünfte Schicht (144; 164) transparenten Materials ein viskoses Material ist und einen Dämpfungsfaktor größer als 1,0 aufweist.

2. Verwendung eines Fensters nach Anspruch 1 als ein Fenster in einem Rumpf einer mobilen fliegenden Plattform.

3. Fenster nach Anspruch 1, ferner mit einem Clip (25), der die erste Schicht und die zweite Schicht in Position hält.

4. Fenster nach Anspruch 1, wobei die erste Schicht (142; 162) transparenten Materials in die Gummidichtung (102) hineinragt, und

wobei umfängliche Kanten der zweiten Schicht (150; 170) transparenten Materials in die Gummidichtung (102) weiter hineinragen, als die dritte Schicht (148; 168).

5. Fenster nach Anspruch 1, wobei die umfänglichen Kanten der vierten Schicht in die Gummidichtung (102) hineinragen.

6. Fenster nach Anspruch 1, wobei die umfänglichen Kanten der fünften Schicht in die Gummidichtung (102) hineinragen.

7. Fenster nach Anspruch 1, wobei die erste Schicht (142; 162) aus einer Akrylschicht (162) gebildet ist und die vierte Schicht (146; 166) aus einer Glasschicht (166) gebildet ist.

## Revendications

1. Fenêtre (140; 160), comprenant:

une première couche extérieure (142; 162) de matériau transparent;

une deuxième couche intérieure (150; 170) de matériau transparent qui est parallèle à la première couche extérieure (142; 162);

un joint de caoutchouc (102) à proximité de la première couche (142; 162) et de la deuxième couche (150; 170);

une troisième couche (148; 168) de matériau transparent entre les première et deuxième couches, la troisième couche (148; 168) étant moins dense que les première et deuxième couches, la troisième couche (148; 168) étant un espace vide,

une quatrième couche (146; 166) de matériau transparent qui est disposée entre la première couche transparente (142; 162) et la troisième couche transparente (148; 168); et

une cinquième couche (144; 164) de matériau transparent qui est disposée entre la quatrième couche transparente (146; 166) et la première couche (142; 162), et

la cinquième couche (144; 164) de matériau transparent étant une matière visqueuse dont le facteur de perte d'amortissement est supérieur à 1,0.

2. Utilisation d'une fenêtre selon la revendication 1 en tant que fenêtre dans un fuselage aéroporté à plate-forme mobile.

3. Fenêtre selon la revendication 1, comprenant en outre une attache (25) qui maintient la première couche (142; 162) et la deuxième couche (150; 170) en place.

4. Fenêtre selon la revendication 1, dans laquelle la première couche (142 ; 162) de matériau transparent fait saillie dans le joint de caoutchouc (102), et des bords périphériques de la deuxième couche (150; 170) de matériau transparent font saillie dans le joint de caoutchouc (102) plus loin que la troisième couche (148; 168).

5. Fenêtre selon la revendication 1, dans laquelle les bords périphériques de la quatrième couche font saillie dans le joint de caoutchouc (102).

6. Fenêtre selon la revendication 1, dans laquelle les bords périphériques de la cinquième couche font saillie dans le joint de caoutchouc (102).

7. Fenêtre selon la revendication 1, dans laquelle la première couche (142; 162) est constituée d'une couche d'acrylique (162), et la quatrième couche (146; 166) est constituée d'une couche de verre (166).

**_FIG - 1_**

EP 1 928 732 B1

**FIG - 2A**

**_FIG - 2B_**

**_FIG - 3A_**
**_Prior Art_**

*FIG - 3B*

*FIG - 3C*

*FIG - 3D*

**FIG - 3E**

Average Velocity PSD vs. Frequency

(100) ─ ── ·─ 0.51" acrylic
(120) ──────── 0.35" acrylic + 0.025" glass
(50) ············· Baseline (0.35" acrylic )
(140) ─ ··─ ··─ 0.22" acrylic + 0.05" urethane + 0.12" glass
(160) ─ ·─ ·─ 0.22" acrylic + 0.05" visco-material + 0.12"glass

Avg Velocity PSD, (in/s)^2/Hz

Frequency, Hz

**FIG - 4**

EP 1 928 732 B1

Reduction of Noise, Visco-elastic layer vs. Baseline

Visco ref. Baseline , db

Frequency, Hz

160

FIG - 5

Average Velocity, PSD vs. Frequency

Avg Velocity PSD, (in/s)^2/Hz

1.E-04
1.E-05
1.E-06
1.E-07
1.E-08
1.E-09
1.E-10
1.E-11

787 full model
787 full model with vacuum
787 isolated model
787 isolated model with vacuum

Frequency, Hz

0   200   400   600   800   1000

FIG - 6

16

Average Velocity, PSD vs. Frequency

787 full model
787 full model with vacuum
787 full model with vacuum, stiffened C-ring

Frequency

Avg Velocity PSD, (in/s)^2/Hz

FIG - 7

**EP 1 928 732 B1**

**REFERENCES CITED IN THE DESCRIPTION**

**Patent documents cited in the description**

- US 4793108 A

- EP 0869057 A2